Europäisches Patentamt

European Patent Office

Office européen des brevets

(11) Veröffentlichungsnummer: **0 231 527**
**A2**

(12) **EUROPÄISCHE PATENTANMELDUNG**

(21) Anmeldenummer: **86118143.6**

(22) Anmeldetag: **30.12.86**

(51) Int. Cl.⁴: **C02F 1/60**

(30) Priorität: **25.01.86 DE 3602183**

(43) Veröffentlichungstag der Anmeldung:
**12.08.87 Patentblatt 87/33**

(84) Benannte Vertragsstaaten:
**AT BE CH FR GB IT LI LU NL SE**

(71) Anmelder: **Scheuchl, Richard**
**Brombeerweg 2**
**D-8038 Gröbenzell(DE)**

(72) Erfinder: **Heckmann, Klaus, prof.**
**Zu Aichahof 20**
**D-8411 Pettendorf(DE)**
Erfinder: **Jonke, Martina, Dr.**
**Rindenweg 19**
**D-6800 Mannheim 31(DE)**

(74) Vertreter: **Charrier, Rolf, Dipl.-Ing.**
**Postfach 260 Rehlingenstrasse 8**
**D-8900 Augsburg 31(DE)**

(54) Verfahren zur Entkieselung von Wasser.

(57) Zur Entkieselung von Wasser wird diesem eine Isopolysäure, beispielsweise Wolframat zugesetzt. Durch Zugabe einer Säure, beispielsweise Salzsäure wird der pH-Wert auf kleiner 3,9 eingestellt, wodurch die Kieselsäure mit der Isopolysäure zu Heteropolysäure komplexiert. Die Heteropolysäure und noch vorhandene Isopolysäure werden anschließend durch überstöchiometrische Zugabe eines Kationtensides ausgefällt.

EP 0 231 527 A2

## Verfahren zur Entkieselung von Wasser

Die Erfindung betrifft ein Verfahren zur Entkieselung von Wasser.

Die Anwesenheit von Kieselsäure in Wasser führt zu einer Reihe von lästigen Komplikationen im Verlauf der Verwendung solchen Wassers. In Kesseln beispielsweise setzen sich Kalzium-und Magnesiumionen mit Kieselsäure zu - schwerlöslichen Niederschlägen und Krusten von $Ca^{2+}$-und $Mg^{2+}$-Silikaten um. Die Niederschlagsbildung läßt sich verhindern durch Zugabe von Trinatriumphosphat. Die hierbei entstehenden $Ca^{2+}$-und $Mg^{2+}$-Phosphate bilden einen - schwerlöslichen Schlamm, der sich beispielsweise durch Abschlämmen beseitigen läßt. Die Kieselsäure bleibt in Lösung.

Bei hohen Drücken wird Kieselsäure in Wasserdampf gelöst. Wird der Wasserdampf z.B. in einer nachgeschalteten Turbine entspannt, dann fällt die Kieselsäure als Gel aus. Um diese Niederschläge zu beseitigen, ist entweder ein Abstrahlen z.B. mit Flugasche oder eine Behandlung mit 20%iger Natronlauge erforderlich. Hieraus ergibt sich das Erfordernis, Speisewässer von Hochdruckkesseln grundsätzlich zu entkieseln.

Das am häufigsten angewandte Verfahren gestattet es, durch Direktfilterung über Ionenaustauscher den Kieselsäure -gehalt bis auf etwa 0,02 mg $SiO_2/l$ zu senken. Allerdings ist dies nur in Verbindung mit einer Ionenaustausch-Vollentsalzung möglich, die man jedoch umgehen möchte.

Die Gewinnung von Trink-und Brauchwasser aus kieselsäurehaltigen Rohwassern, d.h. Süß-und Brackwassern, durch Umkehrosmose wird durch Ablagerungen von kolloidaler Kieselsäure an den Oberflächen der Umkehrosmose-Membrane stark beeinträchtigt, da die Ablagerungen die Membranporen verstopfen und somit die Permeatflüsse erniedrigt werden.

Im Zusammenhang mit Revers-Osmoseprozessen sind zur Entfernung der Kieselsäure bisher fünf Verfahren bekannt:
Durch Reduzierung des WCF -ein Faktor, der das Verhältnis von Einspeise-Volumenstrom zu Konzentrat-Volumenstrom angibt -wird die $SiO_2$-Konzentration im Retentat ständig unterhalb der Sättigung gehalten, so daß Ablagerungen nicht auftreten können. Der geringe Wirkungsgrad dieses Verfahrens führt zu hohen Kosten.

Ein erhöhtes Angebot von Fällungsreagenzien, wie beispielsweise Kalk, Aluminiumsulfat, Eisenchlorid usw. führt zu mäßiger Erniedrigung der Kieselsäurekonzentration. Durch die Chemikalienkosten ist dieses Verfahren teuer und auch nur für große Anlagen geeignet.

Da die Löslichkeit der Kieselsäure linear mit der Temperatur ansteigt, führt eine Erwärmung des Wassers zu einer Verminderung bzw. Verhinderung von $SiO_2$-Abscheidungen. Die Erwärmung bedingt jedoch Energiekosten.

Die Löslichkeit der Kieselsäure hat ein Minimum bei schwach alkalischen pH-Werten. Die Einstellung des pH-Wertes zwischen 7 und 8 bewirkt somit eine weitere Minimierung der $SiO_2$-Konzentration. Dieses Verfahren verursacht ebenfalls Chemikalienkosten und der pH-Effekt ist nicht besonders ausgeprägt.

Bei erhöhter Temperatur von mindestens 36°C, bevorzugt 60° bis 70°C ist eine Heißentkieselung bei Zugabe von Magnesiumoxid möglich. Die erreichbare Restkonzentration beträgt etwa 1 mg $SiO_2/l$ und das Verfahren bedingt hohe Energiekosten.

In der analytischen Chemie ist es üblich, zum Nachweis von Kieselsäure diese mit Isopolysäure zu komplexieren (Handbuch der Lebensmittelchemie, Band VIII/Teil 1, Wasser und Luft (1969), Seiten 715 und 716). Die hohe Extinktion der sich bildenden Heteropolysäure gestattet die analytische Bestimmung sehr geringer Konzentrationen an Kieselsäure. In diesem Zusammenhang ist auch die Extraktion der Heteropolysäure in ein organisches Lösungsmittel beschrieben worden, um über eine erhöhte Konzentration des $SiO_2$ in der organischen Phase die Empfindlichkeit des Nachweises von $SiO_2$ zu steigern. Hierbei handelt es sich jedoch um ein reines Analyseverfahren, das keinen Hinweis gibt, Wasser über den Weg der Heteropolysäure zu entkieseln.

Es besteht die Aufgabe, das Verfahren zur Entkieselung von Rohwassern so auszubilden, daß es eine wirksame Entkieselung bei geringen Betriebskosten ermöglicht.

Gelöst wird diese Aufgabe mit den kennzeichnenden Merkmalen des Anspruches 1. Vorteilhafte Ausgestaltungen sind den Unteransprüchen entnehmbar.

Das Verfahren mit seinen möglichen Varianten wird nachfolgend erläutert.

Enthält das Rohwasser nennenswerte Konzentrationen an Phosphat und/oder Arsenat, dann sind diese aus dem Wasser zu beseitigen, was beispielsweise durch Fällung mit $Al(OH)_3$ erfolgt. Der Gehalt des Rohwassers an $SiO_2$ wird bestimmt. Danach wird dem Rohwasser eine konzentrierte Lösung mindestens einer Isopolysäure zugeführt, wobei es sich bevorzugt um eine konzentrierte Lösung von Wolframat und/oder Molybdat handelt. Am Ende der Zugabe soll das molare Konzentrationsverhältnis (Mo)/(Si) bzw. (W)/(Si) mindestens 12/1 betragen. Je höher das Molverhältnis ist, um so schneller kann die anschließende Bildung er Heteropolysäure erfolgen und um so niedriger ist die Restkonzentration an $SiO_2$. Das Molverhältnis kann maximal 1200/1 betragen und liegt bevorzugt im Bereich zwischen 120/1 und 360/1.

Durch Zugabe einer Säure, beispielsweise Salz-und/oder Schwefelsäure wird der pH-Wert des Wassers auf kleiner als 3,9 eingestellt, wobei sich Heteropolysäure bildet. Hierbei sind pH-Werte unter 3,0 nicht erforderlich. Bevorzugt beträgt der pH-Wert 3,5, wobei je nach Temperatur und Konzentration an Mo bzw. W die bildung der Heteropolysäure nach 5 bis 20 Minuten abgeschlossen ist. Hierbei tritt eine Gelbfärbung des Wassers auf, die eine quantitative Verfolgung der Bildungsgeschwindigkeit ermöglicht.

Der Mechanismus der Reaktion der Isopolysäure mit Kieselsäure zu Heteropolysäure ist in seinen Einzelschritten noch nicht bekannt. Eigene Messungen ergeben bei konstantem pH-Wert formal eine Reaktion 1. Ordnung bezüglich der $SiO_2$-Konzentration und 1. Ordnung bezüglich der Mo- bzw. W-Konzentration.

Ändert sich während des Verfahrensablaufs die $SiO_2$-Konzentration des Rohwassers, dann ist ggfs. die Dosierung der Isopolysäure zu verändern.

Bei den vorgenannten Verfahrensschritten wird auch kolloidale Kieselsäure komplexiert.

Die Entfernung der gebildeten Heteropolysäure $H_4Si(W_3O_{10})_4$ bzw. $H_4Si(Mo_3O_{10})_4$ aus dem Wasser kann auf verschiedene Weise erfolgen, wobei die nachfolgend beschriebenen Verfahrensschritte ggfs. miteinander kombinierbar sind.

Es erfolgt eine schwach überstöchiometrische Zugabe eines Kationentensides, was zur sofortigen Bildung eines gelben, schwerlöslichen Niederschlags führt,der sehr schnell sedimentiert und sowohl gut filtrierbar als auch flotierbar ist. Ist die Dosis des Kationentensids hoch genug, dann werden stöchiometrische Überschüsse an Isopolysäure, die für die Komplexierung nicht benötigt wurden, ebenfalls ausgefällt. Hierbei lassen sich Restkonzentrationen an $SiO_2$ von ca. 0,1 mg/l erzielen.

Für die stöchiometrische Zugabe eines einwertigen Kationentensides genügen 4 Moleküle Tensid pro MolekülHeteropolysäure bzw. pro Molekül $SiO_2$. Zur Ausfällung unverbrauchter Isopolysäure wird jedoch bevorzugt ein höheres Verhältnis gewählt. Findet während der Verfahrensdurchführung eine Veränderung der Konzentration von $SiO_2$ im Rohwasser statt, dann kann die zugegebene Menge an Kationentensid entsprechend angepasst werden.

Von den Kationentenside haben sich insbesondere Alkylpyridiniumsalze mit einer Kette der Länge $C_6$ bis $C_{24}$, bevorzugt Hexadecylpyridiniumsalze erwiesen. Die Alkylpyridiniumsalze weisen eine gute Kristallisationsfähigkeit mit Heteropolysäure auf. Die Löslichkeit der Niederschläge ist um so geringer, je größer die Anzahl der Kohlenstoffatome der Kationentenside ist.

Die Alkylpyridiniumsalze und die quartären Ammoniumsalze besitzen mindestens ein permanent quartäres Stickstoffatom in organischer Bindung und sind unter dem Oberbegriff organische Kationen einzuordnen. Die Fällung der Heteropolysäure ist jedoch auch mit anorganischen Kationen möglich.

Zur Fällung der Heteropolysäure ist auch die Zugabe einer organischen Base möglich, wenn diese hinreichend viele Kohlenstoffatome aufweist und durch Proton-Anlagerung mindestens eine positive Ladung annimmt. Geeignet hierfür sind insbesondere primäre, sekundäre und tertiäre Amine mit mindestens einem Stickstoffatom. Die ausgefällten Salze sedimentieren ebenfalls sehr rasch und sind gut filtrier-und flotierbar. Zusätzlich oder anstelle der vorerwähnten niedermolekularen organischen Substanzen mit permanent quartärem und/oder protonierbarem Stickstoff mit der vorerwähnten Anzahl von Kohlenstoffatomen ist zur Fällung der Heteropolysäure auch der Einsatz eines kationischen Polyelektrolyten mit permanent quartären bzw. protonierbaren Stickstoffatomen möglich. Akzeptable Entkieselungsergebnisse wurden hierbei erreicht durch Zugabe von Polyethyleniminen und Polymethacrylsäurecholinestern.

Die Entfernung der Heteropolysäure aus dem Wasser kann auch durch absorbierende oder adsorbierende Ionenaustauscher erfolgen, an deren Oberfläche organische Substanzen mit permanent quartärem bzw. protonierbarem Stickstoff fixiert sind.Hierbei kann es sich um organische Harze mit fixierten positiven Ladungen bzw. fixierten protonierbaren Gruppen handeln. Auch ist der Einsatz von zuvor präparierten Holzkohlen und Silikagelen möglich. Die Oberfläche z.B. der Holzkohle ist hierbei mit einem schwerlöslichen Kationentensid oder einer anderen organischen Substanz mit permanent quartärem oder protonierbarem Stickstoff belegt, beispielsweise mit Dihexadecyldimethylammonium-Ionen und/oder Dioctadecyldimethylammonium-Ionen.

Möglich ist auch die Flüssigextraktion der Heteropolysäure.

Gute Ergebnisse der Entkieselung werden erzielt mit dem Extraktionssystem Kersoin/Trioctylamin.

Die Entfernung der Heteropolysäure durch Umkehrosmose ist ebenfalls möglich, da die Heteropolysäure sich nicht an den Membranoberflächen anlagert, sondern im Retentat verbleibt. Hieraus läßt sich durch Fällung mit erhöhter Effizienz beseitigen.

Aus den vorerwähnten Niederschlägen lassen sich sowohl Molybdän bzw. Wolfram wie auch die Kationtenside usw. mit guter Ausbeute wieder zurückgewinnen. Auch ist die Verbrennung der organischen Stoffe möglich. Der Gehalt des zurückgewonnenen Molybdäns bzw. Wolframs an $SiO_2$ ist so gering, daß er eine Einspeisung in einen erneuten Reinigungsprozeß nicht beeinträchtigt.

Für die Rückgewinnung der Molybdate bzw. Wolframate ist es wesentlich zu wissen, daß die Heteropolysäure bei pH-Werten größer 4 in Isopolysäure und Kieselsäure zerfällt. Mo und W sind als schwerlösliche Sulfide fällbar. Kationtenside und organische Basen sind, soweit es sich nicht um Moleküle mit quartärem Stickstoff handelt, sondern um primäre, sekundäre und tertiäre Amine, in deprotonierter Form in alkalischem Milieu schwer löslich. Alkylpyridiniumsalze lassen sich aus saurem Milieu sehr gut auskristallisieren. Soweit die Fällungsreagenzien nur mit einem geringen Anteil an den Betriebskosten des Verfahrens beteiligt sind ist eine Veraschung vorzuziehen.

Enthält das zu entkieselnde Wasser Phosphate und/oder Arsenate, dann sollten diese vor Zugabe der Isopolysäure entfernt werden.

## Ansprüche

1. Verfahren zur Entkieselung von Wasser, dadurch **gekennzeichnet**, daß die Kieselsäure durch Reaktion mit mindestens einer Isopolysäure zu Heteropolysäure komplexiert wird, wobei spätestens nach Zugabe der Isopolysäure der pH-Wert des Wassers auf kleiner/gleich 3,9 eingestellt und danach die Heteropolysäure aus dem Wasser entfernt wird.

2. Verfahren nach Anspruch 1, dadurch **gekennzeichnet**, daß als Isopolysäure Polymolybdate und/oder Polywolframate verwendet werden.

3. Verfahren nach Anspruch 2, dadurch **gekennzeichnet**, daß nach Zugabe der Polymolybdate und/oder der Polywolframate ein Molverhältnis (Mo)/(Si) bzw. (W)/(Si) von mindestens 12/1 bevorzugt zwischen 120/1 und 360/1, vorliegt.

4. Verfahren nach einem der Ansprüche 1 bis 3, dadurch **gekennzeichnet**, daß die Entfernung der Heteropolysäure durch Zugabe von Kationen und Abtrennen der gefällten schwerlöslichen Salze vom Wasser erfolgt.

5. Verfahren nach Anspruch 4, dadurch **gekennzeichnet**, daß als Kation eine organische Verbindung mit mindestens einem permanent quartären Stickstoffatom zugegeben wird.

6. Verfahren nach Anspruch 5, dadurch **gekennzeichnet**, daß die organische Verbindung aus mindestens einem Kationtensid, (bevorzugt aus Alkylpyridiumsalzen und/oder quartären Ammoniumsalzen mit jeweils mindestens einer Kette der Länge $C_6$ bis etwa $C_{24}$ besteht.

7. Verfahren nach Anspruch 6, dadurch **gekennzeichnet**, daß als Alkylpyridiumsalz ein Hexadecylpyridiumsalz verwendet wird.

8. Verfahren nach einem der Ansprüche 1 bis 7, dadurch **gekennzeichnet**, daß die Entfernung der Heteropolysäure durch Zugabe mindestens einer organischen Base, die durch Proton-Anlagerung mindestens eine positive Ladung annimmt, und Abtrennen der gefällten schwerlöslichen Salze vom Wasser erfolgt, wobei die Base bevorzugt ein primäres und/oder sekundäres und/oder tertiäres Amin mit mindestens einem Stickstoffatom ist.

9. Verfahren nach einem der Ansprüche 1 bis 8, dadurch **gekennzeichnet**, daß zur Fällung der Heteropolysäure mindestens ein kationischer Polyelektrolyt mit permanent quartären oder protonierbaren Stickstoffatomen, bevorzugt ein Polyethylenimin und/oder ein Polymethacrylsäurecholinester verwendet wird.

10. Verfahren nach einem der Ansprüche 1 bis 3, dadurch **gekennzeichnet**, daß das Wasser durch einen die Heteropolysäure absorbierenden oder adsorbierenden Anionenaustauscher geleitet wird.

11. Verfahren nach Anspruch 10, dadurch **gekennzeichnet**, daß als Anionenaustauscher organische Harze mit fixierten positiven Ladungen bzw. fixierten protonierbaren Gruppen und/oder Substanzen mit hoher spezifischer Oberfläche, wie die organische Substanz Silikagel, an deren Oberfläche organische Substanzen mit permanent quartärem bzw. protonierbarem Stickstoff fixiert sind, verwendet werden.

12. Verfahren nach Anspruch 11, dadurch **gekenn-zeichnet**, daß Holzkohle verwendet wird, deren Oberfläche mit DihexadecyldimethylammoniumIonen und/oder Dioctadedecyldimethylammonium-Ionen belegt ist.

13. Verfahren nach einem der Ansprüche 1 bis 9, dadurch **gekennzeichnet**, daß die Heteropolysäure durch einen Lösungsvermittler in ein organisches mit Wasser nicht mischbares Solvenz überführt wird, wobei der Lösungsvermittler eine organische Verbindung mit permanent quartärem bzw. protonierbarem Stickstoff, bevorzugt Trioctylamin ist.